# EUROPEAN PATENT SPECIFICATION

(11) **EP 2 539 530 B1**
(45) Date of publication and mention of the grant of the patent: **27.03.2019**
(21) Application number: 11746922.1
(22) Date of filing: 24.02.2011
(51) Int. Cl.: E21B 7/02, E21B 44/00, E21D 20/00, G05G 9/047, G06F 3/14, E21D 9/00

(54) **ROCK DRILLING RIG, METHOD FOR ROCK DRILLING, AND CONTROL SYSTEM OF ROCK DRILLING RIG**
STEINBOHRVORRICHTUNG, STEINBOHRVERFAHREN UND STEUERSYSTEM FÜR DIE STEINBOHRVORRICHTUNG
INSTALLATION DE FORAGE DE ROCHE, PROCÉDÉ DE FORAGE DE ROCHE, ET SYSTÈME DE COMMANDE D'INSTALLATION DE FORAGE DE ROCHE

(30) Priority: 25.02.2010 FI 20105185
(43) Date of publication of application: 02.01.2013
(73) Proprietor: Sandvik Mining and Construction Oy, 33330 Tampere (FI)
(72) Inventor: PUURA, Jussi, FI-33330 Tampere (FI)
(74) Representative: Sandvik
(86) International application number: PCT/FI2011/050166
(87) International publication number: WO 2011/104441

(56) References cited:
- WO-A1-2007/000488
- WO-A1-2007/026052
- WO-A1-2008/078001
- FI-B- 118 052
- JP-A- 2001 306 168
- US-A1- 2003 102 868
- ZABLOCKI, ANDRZEJ: 'Louhintatyot ja kalusto. Kaivos-ja louhintatekniikan kasikirja' VUORIMIESYHDISTYS 1982, HELSINKI, pages 203 - 270, XP008158376

## Description

### BACKGROUND OF THE INVENTION

The invention relates to a rock drilling rig comprising a movable carrier provided with one or more drilling booms. The drilling boom is provided with a drilling unit comprising a rock drilling machine for drilling drill holes in rock. The rock drilling rig may be used for drilling drill holes as a desired pattern.

Further, the invention relates to a method and a control system for rock drilling, where the rock drilling rig is used for drilling drill holes as a desired pattern. A rock drilling system which drills holes according to a pattern is known for example from WO2007000488.

The field of the invention becomes apparent in greater detail from the preambles of the independent claims.

Rock may be drilled in rounds. Then, drill holes are first drilled in rock, after which the drill holes are charged and blasted. Various tunnels, underground storage halls, containers, parking spaces or other corresponding rock caverns may be formed in the rock by excavation. However, the rock in which such rock caverns are excavated is not always sufficiently firm, uniform and stable by nature. Also, blasting a round may break or otherwise weaken the rock defining the rock cavern, so that the firmness of the rock is insufficient after excavation. Thus, it is rather typical that the ceiling and walls of the rock cavern, sometimes even the floor, must be reinforced. Reinforcing may be done by drilling to the rock a plurality of reinforcement drill holes in which a rock bolt, a cable or the like reinforcement member or reinforcement material is fitted. The reinforcement holes are usually drilled as a fan-like pattern in such a way that they are directed crosswise in relation to the tunnel line. In fan drilling, the drilling unit is positioned crosswise to the tunnel line. Drill holes are drilled in a fan-like manner not only for reinforcement holes but also when excavation holes are drilled in the walls and ceiling of a production tunnel with what is called a production drilling rig. In drilling drill hole fans, it has been observed that one problem is that the positioning movements of the drilling unit usually cause a need to change other positioning directions as well. Therefore, moving the drilling boom and positioning the drilling unit has been observed to be difficult for the operator.

### BRIEF DESCRIPTION OF THE INVENTION

An object of this invention is to provide a novel and improved rock drilling rig, as well as a method and a control system for drilling rock, where drill holes are drilled as a drill hole pattern.

The rock drilling rig according to the invention is characterized in that the control unit comprises at least one drilling mode in which each individual direction of motion of the control member is arranged to provide a physical positioning movement of the drilling unit in relation to only one coordinate or direction angle determined in a drilling pattern, while the rest of the coordinates and directions remain unchanged; and that the influencing directions of the control member are selected in the drilling mode to correspond to the intuitive directions of motion of the drilling unit, whereby moving the control member in one direction of motion provides a real movement of the drilling unit in the direction corresponding to the movement of the control member.

The method according to the invention is characterized by connecting each individual direction of motion of the manual control member to influence the position of the drilling unit in relation to only one coordinate or direction angle; using intuitive connection when moving the target position and the control member, whereby the real directions of motion of the drilling unit and control member correspond to each other.

The control system according to the invention is characterized in that the control system comprises at least one drilling mode in which each individual direction of motion of the control member is bound to control the drilling unit in relation to one coordinate or direction angle; and that the directions of motion of the control member are selected in the drilling mode to correspond to the intuitive directions of motion of the drilling unit.

An idea is that the control system of the rock drilling rig comprises one or more drilling modes for positioning the drilling unit at the start point of a drill hole to be drilled manually, controlled by an operator. The drilling unit moves in response to the movement of the control member. Moving the manual control member is arranged to affect the position and direction of the drilling unit by means of the control system, whereby the control member does not directly control any individual actuator or joint. The control system determines target positions for the joints of the boom and controls, accordingly, the actuators influencing the positioning of the drilling unit. When the drilling mode is connected, moving the manual control member in one direction results in a positioning movement of the drilling unit in relation to one coordinate or direction angle. The rest of the coordinates and directions remain unchanged. Further, the directions of motion of the control member are selected in each drilling mode to correspond to intuitive directions of motion of the drilling unit.

An advantage is that the rock drilling rig can be used more efficiently than before when a drilling mode is in use for manual positioning. The operator indicates a new target position to the drilling unit with a control member, and the control system attends to the required actions with which the target expressed by the operator is achieved in practice. The operator needs not think about joints or kinematics of the boom to achieve the desired movements for the drilling unit but he/she can only focus on giving the control system the target position of the drilling unit, according to which the control system automatically performs the required movements. The operator may position the drilling unit for example one coordinate direction and direction angle at a time. When the target of the drilling unit is moved, those coordinates and directions that are not influenced by the control member that time remain unchanged. In a fan drilling mode, for example, the operator may position the drilling unit on the drilling fan plane without the drilling unit being positioned outside the fan plane by mistake. This decreases the operator's mental load and accelerates the control. Controlling is further essentially facilitated and accelerated by the fact that the directions of motion of the control member are selected in each drilling mode to correspond to the intuitive directions of motion of the drilling unit. Thus, it is easy for the operator to understand all the time in which direction the drilling unit is moving if he/she moves the control member in a selected direction of motion. Owing to intuitive control, less experience of the control system of the drilling rig may be required of the operator.

The idea of an embodiment is that the same rock drilling rig is used both for drilling excavation drill holes in a tunnel face and for drilling a reinforcement fan.

The idea of an embodiment is that in the control mode, moving the drilling unit is arranged to be natural in the drilling direction determined by the mode. In the fan drilling mode, for instance, moving the drilling unit is arranged to be natural to direct the drilling upwards and sidewards. The influencing directions of the manual control member are selected in the modes to correspond to the logical directions of motion of the drilling unit, whereby moving the control member in one direction of motion provides a real movement of the drilling unit in the direction of motion of the control member. Thus, intuitive behaviour is achieved for the control unit, which facilitates the operator's work significantly.

The idea of an embodiment is that the manual control member is a joystick with control movements forwards, backwards and to both sides, i.e. to the right and to the left. Further, the number of control commands may be doubled or multiplied when an alternative function is selected with an auxiliary switch during the above control movements. There are typically two such joysticks for controlling the drilling boom and the drilling unit on it. The operator may select in a display device, for example, which boom and drilling unit are to be controlled with joysticks in each particular case.

The idea of an embodiment is that the rock drilling rig intended for drilling a face and reinforcement holes comprises two or more drilling booms, each of which is provided with a drilling unit. The rock drilling rig may be used for drilling excavation drill holes with one or more drilling units in the face of a rock cavern and, simultaneously, for drilling fan-like reinforcement holes with one or more drilling units. Thus, two work stages can be attended to at the same time in one position of the rock drilling rig, which saves time because the rock drilling rig needs not be separately positioned and navigated to drill reinforcement holes.

The idea of an embodiment is that the rock drilling rig is a production drilling rig with which excavation holes can be drilled as a fan-like pattern on the ceiling and walls of a tunnel or the like rock cavern. The number, locations, dimensions, depth and direction of holes to be drilled and other information required for the drilling may be determined in a drilling pattern.

The idea of an embodiment is that the rock drilling rig is a fan drilling rig in which the drilling unit can be turned on the drilling fan plane in such a way that the holes to be drilled in the drilling fan can be directed in the direction of the rotation angle. Turning the drilling unit may be performed in relation to what is called a pivot point, the location of which can be determined by the operator on the drilling fan plane.

The idea of an embodiment is that a pivot point is determined in a fan drilling rig to be at the front end of the drill bit, whereby the rotation angle of the hole to be drilled next can be changed in relation to the pivot point.

The idea of an embodiment is that in fan drilling, all or several drill holes of the drilling fan can be directed in such a way that the imaginary extensions of their mid axles run through one pivot point. Here, the drill holes are drilled with a rock drilling rig in which the drilling unit is turned around the pivot point on the drilling fan plane. The location of the pivot point on the fan plane can be moved by means of the control member. The operator gives the pivot point a new target position, after which the control unit determines new target values for the boom joints and controls the actuators influencing the boom in such a way that the pivot point moves to the target position indicated by the operator. Moving the control member in one coordinate direction is bound to move the pivot point on the fan plane in relation to only one coordinate. When the control member is moved in direction x, the pivot point correspondingly moves in direction x, and when the control member is moved in direction z, the pivot point moves in direction z. The directions of motion of the control member may be arranged in such a way that the member has intuitive operation in relation to the real directions of motion of the pivot point.

The idea of an embodiment is that the user interface of the control unit of the rock drilling rig comprises at least one display device in which a display image can be shown to facilitate manual positioning. The display image is a sight tool in which the operator is shown the location of the drilling unit and the locations of the drill holes determined in the drilling pattern. The directions of motion of the manual control member are bound to the directions shown in the display image. Thus, one direction of motion of the manual control member is arranged to control the target position of the drilling unit in one direction shown in the display image.

The idea of one embodiment is that the display device presents a display image comprising at least two partial views having projections differing from each other; in other words, the directions of observation in the partial views are different. The partial views may present the determined location and direction of the drilling unit in relation to the xz-directed fan plane where the start points of the holes to be drilled are positioned. The partial views are simultaneously active in the display image. The display device thus presents all essential information relating to the positioning of a drilling unit simultaneously in a single display image. The first partial view may be an xz projection of the fan plane in the direction of the tunnel line; in other words, the fan plane is observed from direction y. The second partial view may be a projection in the direction of the xy plane of the same fan plane, where the fan plane is observed from above, i.e. from the direction of z axis. Thus, the first partial view presents the position of the drilling unit in the direction of the fan plane, while the second partial view presents the position of the drilling unit in the direction of depth. The operator can thus see in a single display image all coordinate directions affecting the positioning of the drilling unit simultaneously. Further, the first partial view and the second partial view may be presented in the display image simultaneously and one upon the other in the vertical direction of the display device. Furthermore, in the partial views positioned one upon the other in vertical directions, a symbol denoting the drilling unit may be presented in the same location, seen in the lateral direction. Such a display image is particularly illustrative and gives the operator a clear image of the situation. This application may be utilized not only for fan drilling but also for instance for surface drilling, such as bench drilling.

The idea of an embodiment is that first, in fan drilling, the location of the drilling fan plane is determined and the drilling unit is positioned on the drilling fan plane. Subsequently, the drilling unit is kept on the fan plane and the following stages of the positioning or sighting are performed without the position of the drilling unit changing in the direction of the y coordinate. Here, the target position is moved by means of the control member in the direction of the drilling fan plane without affecting the drilling fan plane. Positioning the drilling unit on the fan plane may be regarded as the first stage of the positioning, i.e. coarse positioning, while moving on the fan plane may be regarded as the second positioning stage, i.e. fine positioning.

The idea of one embodiment is that first, in fan drilling, the location of the drilling fan plane is determined and the drilling unit is positioned on the drilling fan plane. Subsequently, the control unit is given a control command to lock the moving of the drilling unit, so that the drilling unit remains its position on the fan plane during the positioning movements to be performed next. In this way, a situation where the operator moves the drilling unit by mistake in the direction of y coordinate away from the fan plane is avoided.

The idea of an embodiment is that a positioning error of the carrier of a fan drilling rig in relation to the drilling fan plane is taken into account in the control unit. Thus, it is not necessary to position the rock drilling rig perpendicularly to the drilling fan plane but the rock drilling rig may remain in an oblique position relative to the fan plane. The position error of the carrier is determined in connection with navigation, whereby the control unit takes the position error into account and guides the drilling unit in determined directions in a drilling pattern.

The idea of an embodiment is that the rock drilling rig is a surface drilling rig. A desired drill hole pattern is drilled with the surface drilling rig, for instance when performing bench drilling. The drill hole pattern comprises a plurality of drill holes which are typically directed downwards or slantingly downwards at a desired angle. A drilling pattern may be drafted in advance for such a drill hole pattern, defining for example the number of drill holes, location of the start points, drill hole depth as well as directions. The drilling pattern may be inputted to the control unit of the rock drilling rig and it may be shown to the operator in the manner described in this application. The operator may also determine the drilling pattern or the location and direction of individual holes as well as other information on the holes himself/herself and use, in drilling the holes, the display device of the control unit as an auxiliary means in directing and positioning, as described above in this application. Further, the surface drilling rig is provided with the kind of drilling mode described in this application, where the drilling unit may be positioned at the start point of a drill hole to be drilled, controlled manually by the operator. The drilling unit moves in response to the movement of the control member. Moving the manual control member is arranged to affect the position and direction of the drilling unit by means of the control system, whereby the control member does not control an individual actuator or joint directly. The control system determines the target positions for the boom joints and, accordingly, controls the actuators influencing the positioning of the drilling unit. When the drilling mode is on, moving the manual control member in one direction causes a positioning movement of the drilling unit in relation to one coordinate or direction angle. The rest of the coordinates and directions remain unchanged. This is what is called coordinate control. In addition, the directions of motion of the control member are selected in the surface drilling mode to correspond to the intuitive directions of motion of the drilling unit.

The idea of one embodiment is that the rock drilling rig is a surface drilling rig the control system of which comprises two control members, such as joysticks. The first joystick is used for controlling the location of the drill bit in a rectangular coordinate system on x-y plane. The location may be changed for instance one coordinate at a time. The height position, i.e. z coordinate, of the drill bit may be changed by means of a push button, for example. The second joystick is used for controlling the tilting of a substantially vertically directed feed beam forwards - backwards as well as the tilting in the lateral direction of the rock drilling rig. When the feed beam is tilted, the location of the drill bit remains unchanged. Owing to the surface drilling mode, moving the first control member in one direction causes a positioning movement of the drill bit in relation to one coordinate, while the rest of the coordinates remain unchanged. Moving the second control member in one direction of motion causes in the surface drilling mode a change in one direction angle of the feed beam without affecting the location of the drill bit or another direction angle. Further, the change rate of the real control movements caused by the control members may be arranged to be directly proportional to the extent of the deflection of the control member.

The idea of an embodiment is that the rock drilling rig is a surface drilling rig the control system of which utilizes in the control a separate rig-specific coordinate system of the rock drilling rig instead of the coordinate system of the mine or the project coordinate system. The tilt of the carrier of the rock drilling rig is determined by means of one or more sensors or measuring devices. Likewise, all joint angles of the boom are determined by means of sensors or measuring devices. Hence, the control system may continuously calculate the accurate location of the front end of the drill bit and the tilt of the feed beam. The control unit takes into account the operator's manual control commands and controls the required actuators, so that the target position and direction of the drill bit, expressed by the operator, are realized automatically. Thus, the operator does not control individual actuators in the positioning but the control unit executes the coordinate control automatically.

### BRIEF DESCRIPTION OF THE FIGURES

Some embodiments of the invention will be explained in greater detail in the attached drawings, in which
Figure 1 shows schematically a side view of a rock drilling rig the rock drilling unit of which enables drilling of drill holes in the direction of the tunnel line and drill holes in the cross direction relative to the tunnel line;
Figure 2 shows schematically a perspective view of a drilling pattern positioned in a tunnel face, and a bolting pattern positioned in the excavated portion of the tunnel;
Figure 3 shows schematically a flow chart illustrating the functioning of a control system;
Figure 4 shows schematically a rectangular x,y,z coordinate system used in drilling excavation drill holes as well as direction angles u and v;
Figure 5 shows schematically a control member as well as a rectangular x,y,z coordinate system and direction angles θ₁ and θ₂ used in drilling a fan;
Figure 6 shows schematically the intuitive operating principle of the control in a greatly simplified manner;
Figure 7 shows schematically positioning of a drilling unit in the reinforcement mode;
Figure 8 shows schematically a user interface of a rock drilling rig intended for fan drilling as well as its connections;
Figure 9 shows schematically a display image presented in a display device and having two partial views positioned one upon the other, where the plane of the drilling fan under observation and the drilling unit are shown in two different projections;
Figure 10 shows a fan drilling unit of a production drilling rig;
Figure 11 shows schematically a fan drilling unit of a second production drilling rig, seen from the direction of the tunnel line;
Figure 12 shows schematically a top view of a rock drilling rig positioned in an oblique position in relation to the fan plane;
Figure 13 shows schematically a front view of a surface drilling rig and tilting of its feed beam in the surface drilling mode in the lateral direction of the rig;
Figure 14 shows schematically a side view of a surface drilling rig and tilting of its feed beam in the surface drilling mode in the forwards - backwards direction;
Figure 15a shows schematically a side view of positioning of a drill bit in the drilling mode by coordinate control first on the x-y plane and subsequently in the elevational direction, i.e. direction z.
Figure 15b shows schematically a side view of directing of a feed beam in the drilling mode by coordinate control, whereby the location of the drill bit remains unchanged during the directing.
Figure 16 shows schematically the principle of bench drilling, which is one object of application of surface drilling.

For the sake of clarity, the figures show some embodiments of the invention simplified. Similar parts have been denoted with the same reference numerals in the figures.

### DETAILED DESCRIPTION OF SOME EMBODIMENTS OF THE INVENTION

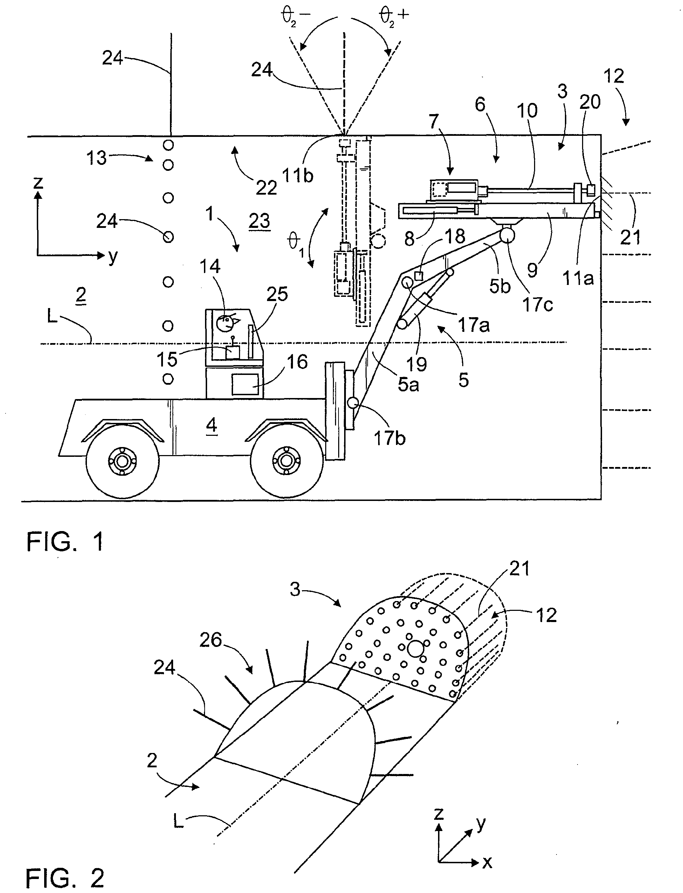

Figure 1 shows a rock drilling rig 1 navigated in a face 3 of a tunnel 2 or the like rock cavern. The rock drilling rig 1 comprises a movable carrier 4 provided with one or more drilling booms 5, each of which has a rock drilling unit 6 at its outermost end. The rock drilling unit 6 comprises a rock drilling machine 7 which can be moved by means of a feed device 8, guided by a feed beam 9. The drilling machine 7 may comprise an impact device for giving impact pulses to a tool 10 attached to the drilling machine. Further, the drilling machine 7 may comprise a rotation device for rotating the tool 10. The drilling unit 6 may be positioned at a start location 11a of a drill hole, planned in advance, by moving the boom 5. A drilling pattern may be predesigned for the drilling, which pattern may define the start locations, end points, directions, lengths and dimensions of the drill holes to be drilled by means of the coordinate system of the drilling pattern. Separate drilling patterns may be designed for drilling a round 12 and for a rock bolt fan 13. When the rock drilling rig 1 is driven to the drilling location, navigation is first carried out in which the coordinate system of the drilling rig is connected to the coordinate system of the working site. Further, the coordinate system of the drilling pattern may be brought together with the coordinate system of the rock drilling rig and the coordinate system of the working site, i.e. what is called a project coordinate system.

The actual drilling cycle may be performed automatically for each drill hole after the drilling unit 6 has first been positioned in the start location and direction determined by the drilling pattern. The drilling unit 6 may be positioned manually. Thus, an operator 14 gives, by means of a control member 15, the drilling unit 6 a new target position, on the basis of which the control system determines a target position for the joints and the required movements of the boom 5 to bring the joints to the new targets by means of actuators. The control system may comprise one or more control units 16, which may be a computer or a processor capable of determining the required movements on the basis of the physical structure and current position of the boom. The boom 5 may comprise two or more boom parts 5a, 5b connected to each other by means of joints 17a. Further, the boom 5 is connected to the carrier by means of a joint 17b and to the drilling unit 6 by means of a joint 17c. The drilling boom 5 is a construction which can be moved in a versatile manner although Figure 1 shows, for the sake of clarity, only a greatly simplified boom. In connection with the joints 17, there may be sensors 18 or the like measuring devices, and on the basis of the position information obtained from them, the control unit 16 can determine the position of the boom. The boom 5 and its parts can be moved with actuators 19 which can be controlled by the control unit 16 on the basis of the target location indicated by the operator 14 and the position information on the boom 5. For the sake of clarity, Figure 1 shows only one sensor and one actuator.

In the positioning, the position of the drilling unit 5 can be observed on the basis of the position of a drill bit 20 at the outermost end of the tool 10 because it is the intention to take the drill bit 20 to a start location 11a of the drill hole to be drilled. The direction can be observed as the direction of the longitudinal axis of the tool 10. In Figure 1, the drilling unit 5 is positioned at the point of an excavation drill hole 21 to be drilled in the face 3 of the rock cavern. The tunnel 2 is excavated by drilling in its face 3 several excavation drill holes 21 substantially in the direction of a tunnel line L, which are charged after the drilling. In blasting, rock material is detached from the rock by the amount of the round 12. The excavation drill holes 21 may, of course, be directed somewhat slantingly, for instance by the amount of what is called a look-out angle. The excavation drill holes 21 in a face drilling pattern include profile holes, field holes and cut holes, for example. The only purpose of the excavation holes 21 is to ensure formation of the desired round length and detachment of rock in the way planned and as pieces of the right size. Blasting a round may damage the rock defining the tunnel, or the firmness of the rock may be insufficient by nature in order to guarantee a safe tunnel. Thus, there may be a need to reinforce the ceiling 22 and walls 23 of the tunnel 2. The rock may be reinforced by drilling, in accordance with a predetermined pattern, several adjacent reinforcement drill holes 24 to which a rock bolt or the like reinforcement can be fitted. The number, depth, diameter, start locations and directions of reinforcement drill holes 24 may be determined in a reinforcement pattern, which represents one form of drilling patterns. The reinforcement drill holes 24 may be drilled in fan form, whereby there are drill holes on both walls 23 and on the ceiling 22 of the tunnel. Alternatively, reinforcement drill holes 24 can be drilled in a fan-like manner only on the ceiling 22, so that an overhead reinforcing beam is provided. The reinforcement pattern determines an xz-directed plane which is crosswise, usually perpendicularly, to the tunnel line L and on which start locations 11b of the reinforcement drill holes 24 are located. The direction of the reinforcement holes 24 is thus crosswise to the tunnel line L. The drilling boom 5 is, however, constructed in such a way that the drilling unit 6 can be positioned in the start locations 11b of the reinforcement holes 24 pointing upwards, sidewards or sometimes even downwards.

When excavation drill holes 21 are drilled, the operator 14 connects the control unit 16 to the face drilling mode, and when the same drilling unit 6 is used for drilling reinforcement drill holes 24, the operator 14 selects the reinforcement mode. By means of the modes, it is possible to have an influence on how the control unit 16 performs the real positioning movements of the drilling unit 5 in response to the operator's 14 manual control movements. The control member 15 may be a joystick, turning of which in a given direction may implement a different movement for the drilling unit 6 in the reinforcement mode than in the face drilling mode.

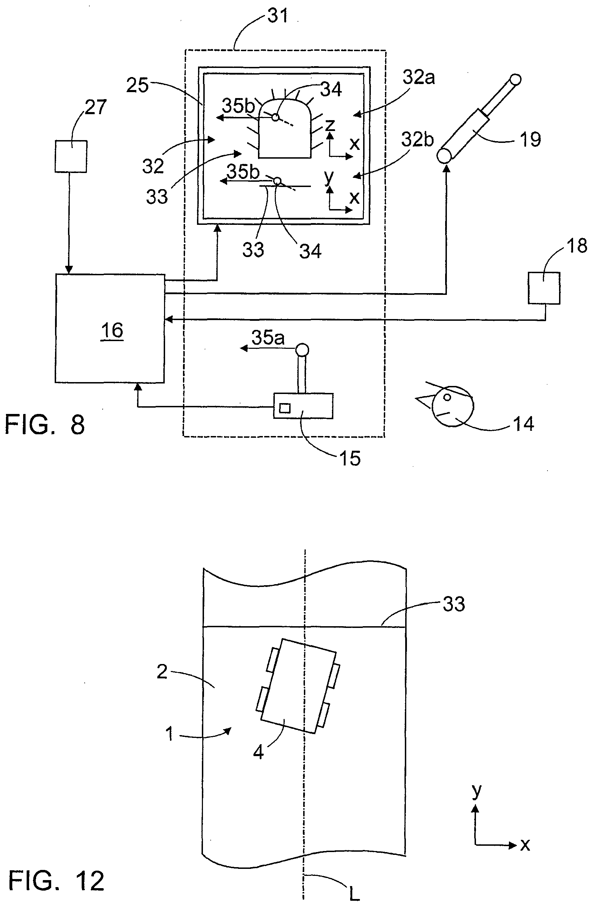

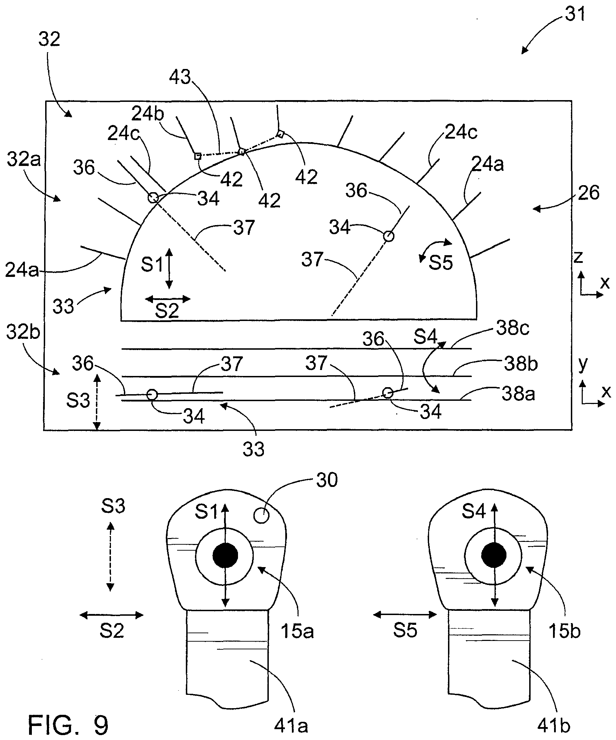

The control system may further comprise a display device 25 which may show the drilling patterns and the position of the drilling unit 6 relative to the holes to be drilled. The operator 14 may perform the manual control movements on the basis of the information obtained from the display device 25, as explained below in the context of Figures 8 and 9.

The purpose of Figure 2 is to further illustrate drillings to be performed in the tunnel 2. Excavation drill holes 21 may be drilled in the tunnel face 3 substantially in the direction of the tunnel line L to excavate a round 12. The figure also shows a drill hole fan 26 formed by reinforcement drill holes 24, located crosswise to the tunnel line L. A plurality of such fans 26 may be drilled in such a way that they are located at a predetermined distance from one another, seen in the direction of the tunnel line L. Drilling the face 3 and drilling the fan 26 may be performed at separate stages, in which case the rock drilling rig 1 is positioned and navigated separately for each stage. Alternatively, both drilling the face 3 and drilling the fan 26 may be performed with the rock drilling rig in such a way that the same positioning and navigation are used. Sometimes, the firmness of the rock may be so poor that it is necessary to reinforce the rock before a new round can be drilled.

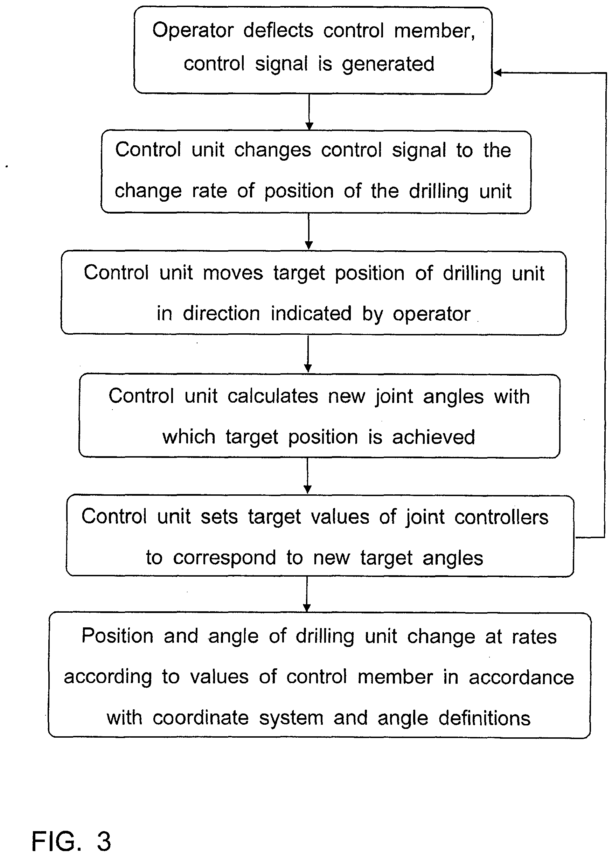

Figure 3 shows a flow chart illustrating the operating principle of the control system when the drilling unit is being positioned. The operator detects the position of the drilling unit and the start location of the drill hole to be drilled in the display device and, subsequently, performs a control movement by deflecting the control member, for example a joystick. The control unit receives a control signal from the control member and turns it into the change rate of the drill unit location. After this, the control unit moves the target position of the drilling unit in a direction desired by the operator and calculates the joint angles of the boom to achieve the target position. Further, the control unit sets the target values of the actuators to correspond to the new target angles, whereby the position and angle of the drilling unit change at rates according to the values of the control member.

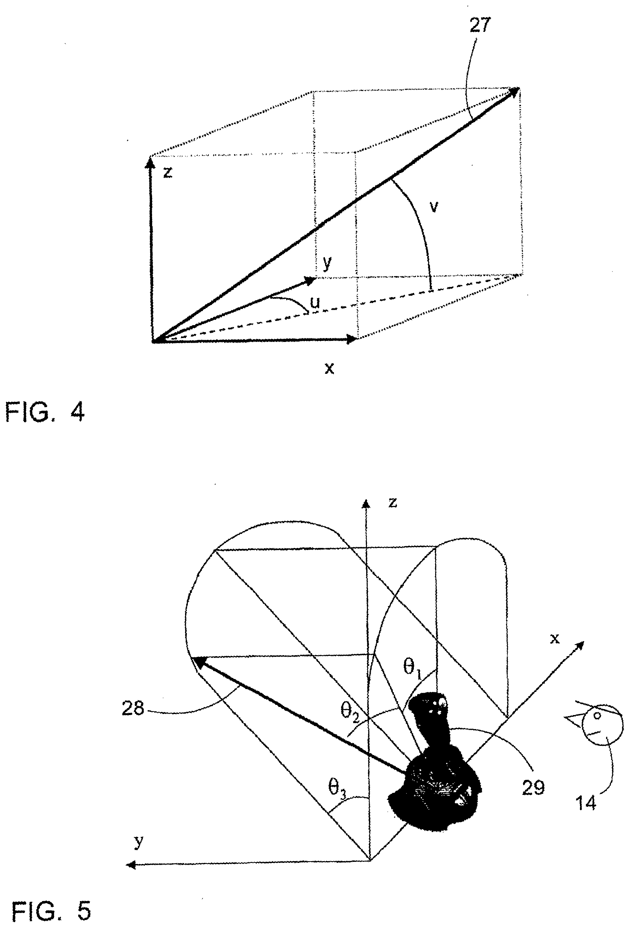

Figure 4 shows a coordinate system used in face drilling as well as direction angles u and v. Also, a hole direction 27 is denoted in the figure. Figure 5, in turn, shows a coordinate system used in the fan drilling mode. As can be seen, face drilling and fan drilling may use a rectangular coordinate system, the axes of which may be defined in the same way. However, the definitions of the direction angles deviate from each other. The direction of the tool is denoted with reference numeral 28 in Figure 5.

Figure 5 further shows a joystick 29 which can be moved forwards, backwards and to both sides. When the control is connected to the reinforcement mode and the joystick 29 is pushed forwards, i.e. away from the operator 14, the drilling unit and the tool in it turn in such a way that the reinforcement hole to be drilled is directed slantingly towards the tunnel face at an angle θ₂. When the joystick 29 is pulled towards the operator 14, the tool is directed in such a way that the reinforcement hole to be drilled points slantingly away from the tunnel face. The coning angle θ₂ achieves positive values when the joystick 29 is pushed forwards, and negative values when the joystick 29 is pulled backwards. The drilling unit can be turned clockwise on xz plane by moving the joystick 29 to the right, whereby the rotation angle θ₁ obtains positive values, and the hole to be drilled is directed to the right. When the joystick 29 is turned to the left, the drilling unit turns anticlockwise and obtains negative values for the rotation angle θ₁, whereby the hole to be drilled is directed to the left.

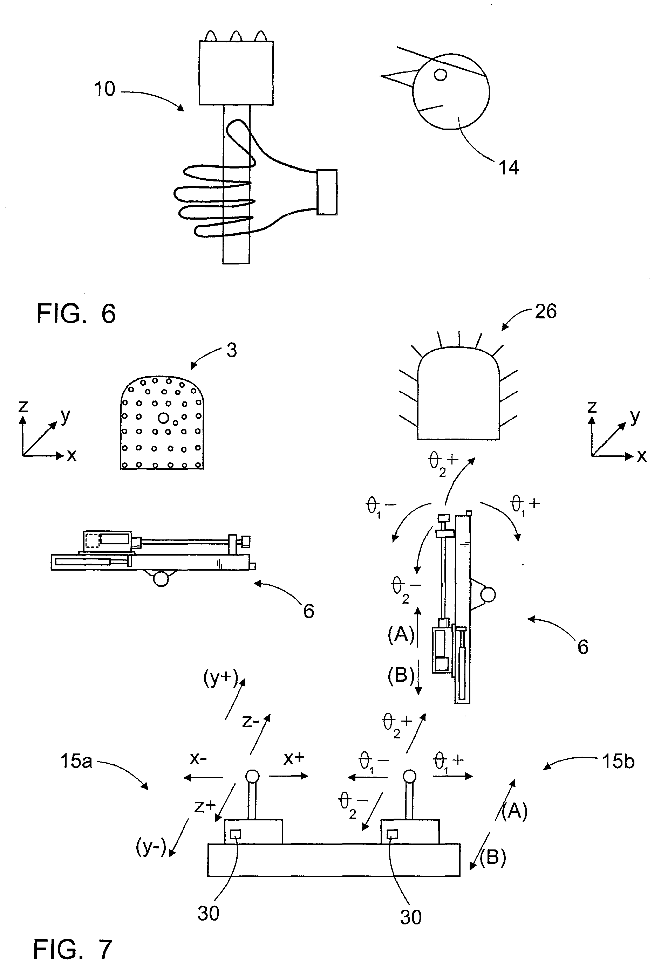

Figure 6 illustrates an intuitive control principle in the reinforcement mode. The operator 14 may imagine that the joystick is the drilling tool 10 that he/she is moving when wishing to give the control unit a new target position to which the drilling unit is to be moved. When, for example, he/she wishes to turn the drilling unit and the tool in it in the direction of the rotation angle θ₁, the operator turns the control member to the left or to the right. Further, when wishing the hole to be drilled to be directed slantingly forwards, the operator pushes the joystick forwards and, correspondingly, when wishing the drill hole to be directed slantingly backwards, he/she pulls the joystick backwards. It is easy for the operator 14 to immediately understand the effect of the movement of the control member. A corresponding intuitive operating principle may be arranged in the control system of a production drilling rig to facilitate drilling of excavation holes as a fan-like pattern.

Figure 7 shows manual positioning of the drilling unit 6 by means of two joysticks 15a and 15b. The figure shows arrows to indicate the directions of motion of the joysticks and, in connection with the arrow, the effect of the movement on the position and direction of the drilling unit 6 is denoted. The effect of the direction of motion when a switch 30 is selected during the movement is denoted in brackets. An alternative function can be selected by means of the switch 30. As can be seen in the figure, the directions of motion of the joysticks 15a, 15b are logically connected relative to the real directions of motion of the drilling unit 6. When the excavation mode is selected, there are differences in the control of the movements. Moving the left joystick 15a forwards or backwards when the switch 30 is selected causes in the excavation mode a movement of the drilling unit 6 in the direction indicated by the tool. Further, moving the right joystick 15b in the lateral direction affects angle u, and moving it forwards and backwards affects angle v.

Figure 8 further shows a user interface 31 of the control unit 16 of the rock drilling rig as well as its connections. The user interface 31 comprises one or more display devices 25, such as a display panel, and one or more control members 15, such as a joystick. By means of the user interface 31, the operator 14 utilizes the control unit 16 and its programs and operating principles in such a way that the drilling unit can be made work in a desired manner.

The display device 25 may be used for showing the drilling pattern of a fan to be drilled. When reinforcement holes are drilled, a reinforcement pattern is loaded to the control unit 16, and when fan-like production holes are drilled, an excavation pattern is loaded to the control unit 16. A display image 32 of the display device 25 may comprise two or more partial views 32a, 32b where a drilling fan plane 33 and a symbol 34 of the drilling unit are presented seen from different directions. Thus, the operator 14 sees the positioning situation in the display image 32 and can give, by means of the control member 15, control commands to the control unit 16 that, in turn, controls one or more actuators 19 so that a movement according to the control command in the position or direction of the drilling unit is physically realized. The operator 14 does not control an individual actuator 19 but gives the control unit a target location or direction, i.e. a target position, which is realized by the control unit. One direction of motion of the control member 15 is bound to control the drilling unit in relation to one direction presented in the display device 25. The location and direction of the drilling unit is determined by means of one or more sensors 18 or the like measuring device, the measuring information of which is transmitted to the control unit 16.

Figure 8 further illustrates the effect of moving the control member 15 in the display image 32. The directions of motion of the control member 15 may be determined intuitively in such a way that when the control member 15 is moved to the left in the direction of the arrow 35a, the symbol 34 in the display image 32 moves correspondingly to the left in the manner indicated by the arrow 35b. Thus, the movement of the control member 15 changes only the value of the x coordinate, while the rest of the coordinates, i.e. y and z, as well as the direction angles remain unchanged.

Figure 9 shows schematically a display image 32 with two partial views 32a and 32b positioned one upon the other. The first partial view 32a shows the drilling fan 26 seen from direction y, and the second partial view shows the same drilling fan 26 seen from direction z. The xz plane of the drilling fan 26 thus forms a fan plane in the partial views. The first partial view 32a shows the locations and directions of the drill holes 24 as well as the location of the drilling unit 6 on the xz plane. The planned drill holes 24a may be shown as lines extending from the profile of the drilling pattern. The drilled holes 24b may be shown in the realized locations and by using a marking, such as a square, at their start point. The planned drill hole 24c to be drilled next may be shown in bold. The second partial view 32b may be used as depth vision; in other words, the location of the drilling unit 6 can be seen in it in relation to the fan plane, i.e. to the xz plane of the drilling fan. The drilling unit 6 may be shown by means of a suitable symbol in the display image 32. In Figure 9, the symbol 34 of the drilling unit 6 is a circle from which a continuous line 36 extends, this line indicating an imaginary drilling hole which would be formed if the drilling were started in the current location and direction of the drilling unit 6. Further, the display image 32 may show a feed beam as a broken line 37, on the basis of which the operator can assess the space required by the drilling. Instead of the above symbol 34 and the related hole line 36 and feed beam line 37, other suitable marking and presentation manners may be used. In the second partial view 32b, the value of the coning angle can be presented as a numeric value. Further, the second partial view 32b may show the fan plane corresponding to the first partial view 32a as a horizontal line 38a. If the drilling pattern is a reinforcement pattern, the fan planes of the other reinforcement fans possibly comprised by the pattern may also be shown as horizontal lines 38b and 38c. The display image 32 according to Figure 9, where the partial views 32a and 32b are positioned one upon the other in the vertical direction, is clear and illustrative, which facilitates the operator's work.

A graphic display image 32, like the one in Figure 9, is a sight tool facilitating the operator's work and it can be applied to drilling a reinforcement fan and a production fan. If, for example, the symbol 34 of the drilling unit is, according to the display image 32, below the start point of a hole to be drilled, the symbol 34 is moved by means of the control member 34 straight upwards, whereby the control unit moves the drilling unit in direction z without any other coordinate or direction angle changing. Correspondingly, if it becomes apparent from the display image that the sighting is not correct but that the drilling unit symbol 34 should be moved straight to the left, the operator moves the symbol in direction x by means of the control member, i.e. gives a new target position to the drilling unit. The control member guides the drilling unit's physical movement, in which only the x coordinate of the drilling unit changes while the rest of the coordinates and direction angles remain unchanged. When the hole line 37 of the symbol 34 and the line 24c indicating a drill hole determined in the drilling pattern are one upon the other in both partial views 32a and 32b, the drilling unit is positioned and directed correctly.

Below the display image 32, Figure 9 further shows control members 15a and 15b comprised by the user interface 31, seen from above. The control members may be joysticks attached to, for example, a control panel 41a, 41b in connection with the operator's seat. The figure shows the movements of the joystick 15a with arrows S1 and S2 and indicates how the drilling unit moves in the display image. When the switch 30 is selected, the y coordinate of the drilling unit can be influenced, as illustrated by arrow S3 in the partial view 32b in the figure. By means of the joystick 15b on the righthand side, the direction angles can be influenced, as illustrated by arrows S4 and S5.

Figure 9 also shows that the start points of the realized holes 24b, i.e. what are called rock identification points 42, may also be presented in the display image 32. The information on the rock identification points 42 may also be stored and processed in the control unit. Furthermore, the display image 32 may show a graph 43 running through the rock identification points 42. This illustrates where the rock surface is located in reality at the point of the fan under observation. The information on the real rock surface may be stored and it may be processed and utilized in the rock drilling rig or outside it.

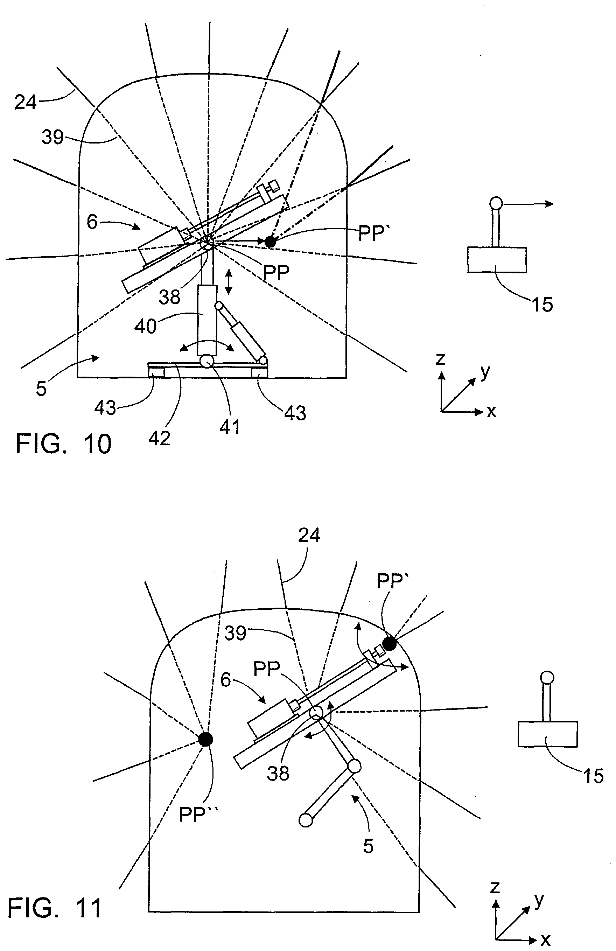

Figure 10 shows a boom 5 used in production drilling rigs, the drilling unit 6 being arranged on the boom by means of a swivel joint 38, so that the drilling unit 6 can be turned in the cross direction relative to the tunnel line. At the point of the swivel joint 38, there is what is called a pivot point PP, through which imaginary extensions 39 of the drill holes 24 run. The boom 5 may comprise a retractable and extendable vertical arm 40, the lower end of which may be connected by means of a joint 41 to a horizontal beam 42 of the boom, which may be further supported against a branch-like boom part 43, which may be supported on the ground. The pivot point PP may be moved in direction z, i.e. upwards or downwards, and in the lateral direction. The horizontal movement of the pivot point PP in direction x can be achieved with the combined effect of a turning movement of the vertical arm 40 and a change in the length. It is also feasible to arrange a linear guide between the vertical arm 40 and the horizontal beam 42, which enables lateral movement. The location of the pivot point PP on the fan plane 33 can be changed by giving, by means of the control member 15, control commands to the control unit. One direction of motion of the control member 15 is arranged to move the pivot point PP in relation to one coordinate. This is illustrated in the figure. When the control member 15 is moved to the right in the figure, the target position of the pivot point also moves to the right in the direction of the x coordinate, as indicated by the arrows. The control unit determines target values for the joint controllers and controls the actuators affecting the position of the pivot point in such a way that the target position given by the operator is achieved. When a pivot point PP' has assumed the correct position, drilling of a fan can be started, in which the drilling unit is positioned around the pivot point by turning it in the direction of the drill holes determined in the drilling pattern.

Figure 11 shows a second arrangement applicable to production drilling, having at the outermost end of the drilling boom 5 formed of one or more boom parts a swivel joint 38, around which the drilling unit 6 can be turned on the fan plane. Thus, the pivot point PP on the fan plane may be located at the point of said joint. The position of the pivot point PP can be moved in the way described above. Further, it is feasible to determine the position of the pivot point in solutions of both Figure 10 and Figure 11 somewhere else than at the joint positioned in the centre part of the drilling unit. The new location of a pivot point PP' may thus be determined to be, for example, the front end of the drill bit. Further, the location of a pivot point PP" on the fan plane may be independent of the construction of the drilling boom and drilling unit, in which case it may be positioned in any location on the fan plane. The control unit takes the position of the pivot point into account and determines the required positioning movements. The location of the pivot point PP can be moved by means of the control member in the ways described above and the display image shown in the display device can be used as an aid. In drilling, turning the drilling unit 6 on the fan plane takes place in relation to the new pivot point PP' or PP" determined.

Figure 12 shows a greatly simplified situation where fan drilling is performed with the rock drilling rig 1, the carrier 4 of which has been driven to an oblique position relative to the drilling fan plane 33. Before starting the drilling, the rock drilling rig 1 has been navigated, whereby its location and the location of the drilling pattern in the tunnel 2 are known. Navigation allows the location of the rock drilling rig to be found out relative to the fan plane 33 determined by the drilling pattern. The control unit takes the position error of the rock drilling rig 1 into account in positioning and controlling the drilling unit.

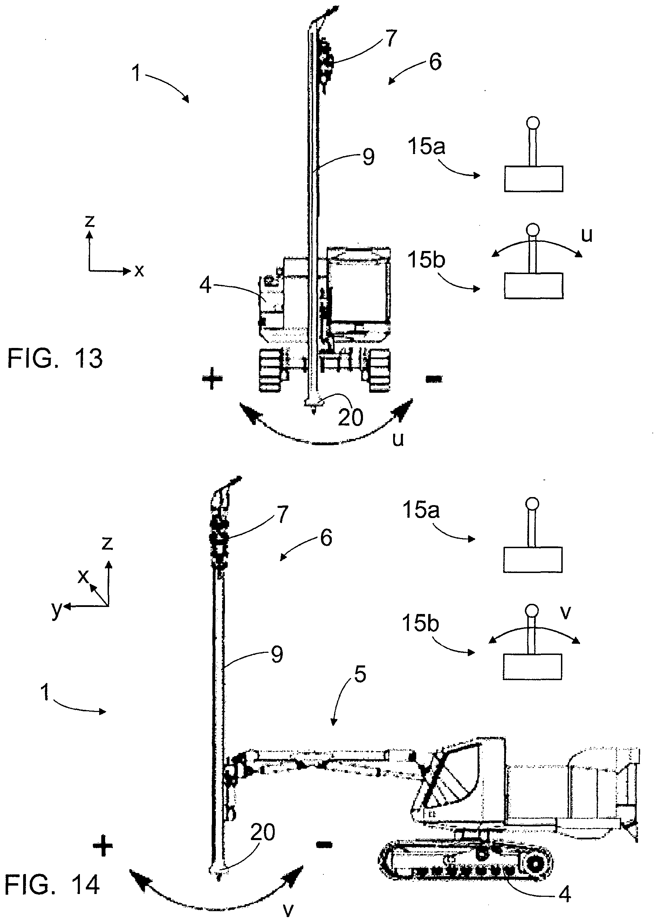

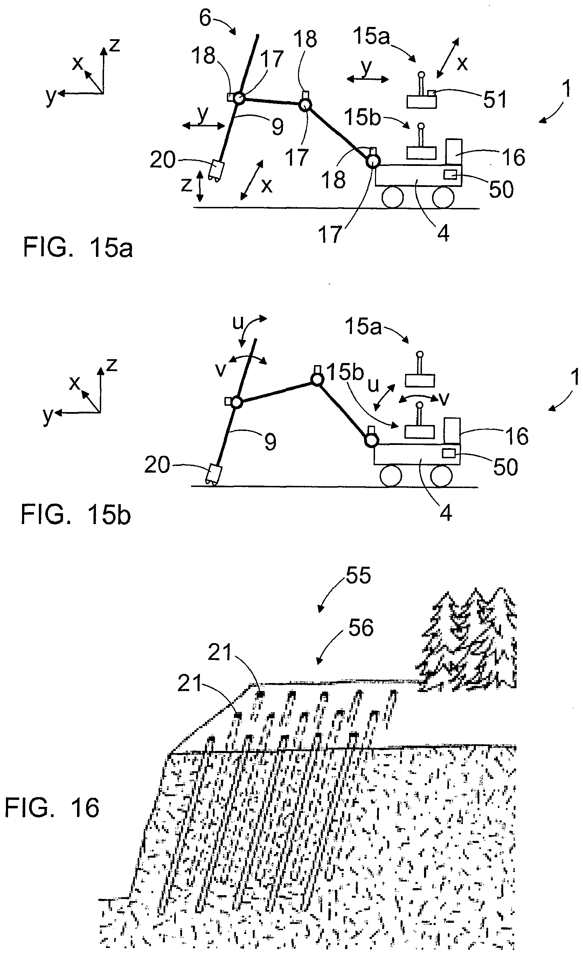

Figures 13 and 14 show a rock drilling rig 1 for surface drilling, which may comprise the basic structure, control principles and features of the rock drilling rig described earlier in this application. The surface drilling rig 1 may be used for drilling excavation holes 21 in rock downwards or slantingly downwards. Figure 16 shows the principle of bench drilling 55, which is one application of surface drilling. In surface drilling, a plurality of drill holes may be drilled in rock from one positioning position of the carrier 4. A drill hole pattern 56 may have been designed in advance. In positioning the drilling unit 6, the drilling mode presented in this application may be utilized, where the operator expresses the target position and directions of the drilling to the control unit, after which the control unit 16 performs the required movements of the boom by controlling the actuators. The control may be according to the chart shown in Figure 3. Further, the control system has intuitive connection, which helps the operator understand the effects of the movements performed with the control members on the location and direction of the drilling unit 6. Figures 13 to 15b show the effects of the movements of the control members 15a, 15b on the location of the drill bit 20 and the direction of the feed beam 9. The control unit 16 takes into account the position of the carrier 4, which can be determined for instance with an inclinometer 50. Further, in connection with the joints 17 or in another location suitable for the purpose, there are sensors 18 or measuring devices, and the control unit 16 determines the location as well as the direction of the drill bit 20, which is the same as the direction of the feed beam 9, by means of the data obtained from them. The control system of surface drilling typically utilizes the rock drilling rig's own coordinate system. In connection with the control member 15a, there may be a switch 51 or the like, with which the drill bit 20 is moved in direction z. When the drill bit 20 is moved in the direction of one coordinate, for example in direction z, the rest of the coordinates x and y remain unchanged, as do the direction angles u and v. This is according to the principle of coordinate control.

In some cases, features presented in this application may be used as such, irrespective of other features. On the other hand, features presented in this application may, if required, be combined to form various combinations.

The drawings and the related description are only intended to illustrate the idea of the invention. Details of the invention may vary within the claims.

## Claims

1. A method for rock drilling, the method comprising:
drilling a plurality of drill holes (21) as a desired pattern in rock with at least one drilling unit (6);
presenting graphically drill hole information on the drilling pattern in a display image (32) of a display device (25);
positioning the drilling unit (6) at the point of a drill hole to be drilled by means of a drilling boom (5);
determining the real position of the drilling unit (6), which comprises location and direction information;
controlling positioning of the drilling unit (6) by means of at least one control unit (16);
giving, by means of at least one manual control member (15), a target for the location and direction of the drilling unit (16) in relation to the real position;
transmitting the target given by means of the control member (15) to the control unit (16) and processing the target in the control unit (16) without direct control of actuators influencing the position of the drilling unit (6);
determining in the control unit (16) the required control movements for actuators (19), taking into account the target position and the real position;
controlling the actuators (19) by means of the control unit (16) and moving the drilling unit (6) towards the given target position;
**characterized by**
connecting each individual direction of motion of the manual control member (15) to influence the target position of the drilling unit (6) in relation to only one coordinate or direction angle; and
using intuitive connection in moving the target position and the control member (15), whereby the real directions of motion of the drilling unit (6) and the control member (15) correspond to each other such that the directions of motion of the control member (15) are connected to the directions presented in the display image (32) in the drilling mode.

2. A method according to claim 1, **characterized by**
using the drilling unit (6) for drilling a fan-like pattern comprising a plurality of drill holes (21);
determining the location of the drilling fan plane;
positioning the drilling unit (6) on the drilling fan plane; and
moving the target position by means of the control member (15) in the direction of the drilling fan plane without affecting the drilling fan plane.

3. A method according to claim 1 or 2, **characterized by**
inputting a drilling pattern designed for the drilling to the display device (25) of the control unit (16);
presenting graphically the drilling pattern relating to the drilling in question in the display image (32) of the display device (25);
presenting in the display image (32) by means of a graphic symbol (34) the real location of the drilling unit (6) in relation to the drilling pattern;
moving the control member (15) in one direction presented in the display image (32) to give a new target position to the control unit; and
moving the drilling unit (6) in the direction corresponding to the movement of the control member (15), controlled by the control unit (16).

4. A method according to any one of the preceding claims, **characterized by**
using the rock drilling rig for fan drilling;
drilling a fan of holes for mounting reinforcements; and
performing the drilling in accordance with a reinforcement pattern.

5. A method according to any one of the preceding claims 1 to 3, **characterized by**
using the rock drilling rig for fan drilling;
drilling a fan of holes for excavation; and
performing the drilling in accordance with an excavation pattern.

6. A method according to any one of the preceding claims, **characterized by**
navigating the rock drilling rig (1) before starting the drilling, whereby the location of the rock drilling rig (1) is determined and the required changes in coordinate systems are performed;
taking into account the relative location of the drilling fan plane and the rock drilling rig (1) in controlling the drilling unit (6), and performing the required corrections for the control; and
controlling the drilling unit (6) in the directions determined by the drilling pattern, irrespective of the relation of the rock drilling rig's (1) location to the drilling pattern.

7. A method according to any one of the preceding claims 1 or 2, **characterized by**
using the rock drilling rig for fan drilling;
determining the location of the drilling fan plane on the tunnel line; positioning the drilling unit on the drilling fan plane;
turning the drilling unit on the drilling fan plane to direct the holes to be drilled in the drilling fan; and
performing the turning of the drilling unit (6) in relation to a pivot point (PP), the location of which is determined by the operator on the drilling fan plane.

8. A method according to claim 7, **characterized by**
giving the pivot point (PP) a new target position on the fan plane by means of the control member (15), whereby each individual direction of motion of the control member (15) on the fan plane influences the target position of the drilling unit (6) only in relation to one coordinate.

9. A control system of a rock drilling rig, which rock drilling rig (1) comprises at least one drilling boom (5) and a drilling unit (6) arranged on it for drilling a desired drill hole pattern;
and which control system comprises:
at least one control unit (16);
at least one display device (25) with at least one display image (32);
at least one control member (15) for giving a target for the location and direction of the drilling unit by moving the control member;
means for determining the real position and direction of the drilling unit (6);
and wherein the control unit (16) is arranged to determine the movement requirements and to control actuators (19) influencing the location of the drilling unit (6) on the basis of the real position of the drilling unit (6) and the target given by the control member (15);
**characterized in that**
the control system comprises at least one drilling mode in which each individual direction of motion of the control member (15) is bound to control the drilling unit in relation to one coordinate or direction angle; and
the directions of motion of the control member (15) are selected in the drilling mode to correspond to the intuitive directions of motion of the drilling unit (6) such that the directions of motion of the control member (15) are connected to the directions presented in the display image (32) in the drilling mode.

10. A control system according to claim 9, **characterized in that**
a user interface (31) of the control system comprises, in addition to said at least one control member (15), at least one display device (25); and
the display device (25) comprises at least one display image (32) for presenting the location of the drilling unit (6) by means of a graphic symbol (34) and, further, for presenting the location and direction of the drill holes, whereby the display device (25) is a sight tool for performing manual positioning.

11. A control system according to claim 9 or 10, **characterized in that**
the control system comprises a fan drilling mode intended for controlling the drilling unit (6) when drill holes are drilled in a fan-like manner in the cross direction relative to the tunnel line;
the control system comprises a face drilling mode intended for controlling the drilling unit (6) when excavation holes are drilled in the direction of the tunnel line; and
the control system is arranged to respond to the moving of the control member (15) with different responses in the fan drilling mode and in the face drilling mode.

12. A rock drilling rig comprising:
a movable carrier (4);
at least one drilling boom (5);
a drilling unit (6) which is arranged on the drilling boom (5), and which drilling unit (6) comprises a feed beam (9) and a rock drilling machine (7);
a plurality of joints (17) between the drilling unit (6) and the carrier (4) as well as a plurality of actuators (19) for influencing the position of the drilling unit (6);
and a control system for positioning the drilling unit (6);
**characterized in that** the control system is according to claim 9.

13. A rock drilling rig according to claim 12, **characterized in that**
a user interface (31) of the control unit (16) comprises at least one display device (25) with at least one display image (32);
the control unit (16) is arranged to display in the display image (32) the location of the drilling unit (6) by means of a graphic symbol (34) and, further, the locations and directions of the drill holes; and
the directions of motion of the control member (15) are connected to the directions presented in the display image (32) in the drilling mode, whereby moving the control member (15) in one direction presented in the display image (32) is arranged to result in a physical positioning movement of the drilling unit (6) in the corresponding direction.

14. A rock drilling rig according to claim 13, **characterized in that**
the control unit (16) is arranged to present in the display image (32) a drilling pattern and the locations and directions of the drill holes determined in it.

15. A rock drilling rig according to any one of the preceding claims 12 to 14, **characterized in that**
the drilling boom (5) and the drilling unit (6) connected to it are provided with means for drilling only a fan-like drill hole pattern;
the drilling unit (6) is connected to the drilling boom (5) by means of a horizontally directed swivel joint (38) and is turnable on the plane of the fan to be drilled to direct the drilling unit (6) in the manner determined in the drilling pattern; and
the control unit (16) is arranged to control the turning of the drilling unit (6) on the fan plane in relation to a pivot point (PP), the location of which can be freely determined on the fan plane by moving the control member (15).

## Patentansprüche

1. Steinbohrverfahren, wobei das Verfahren umfasst:
Bohren einer Vielzahl von Bohrlöchern (21) als gewünschtes Muster in Stein mit mindestens einer Bohreinheit (6);
grafisches Darstellen von Bohrlochinformationen über das Bohrmuster in einem Anzeigebild (32) einer Anzeigevorrichtung (25);
Positionieren der Bohreinheit (6) an der Stelle eines zu bohrenden Bohrlochs mittels eines Bohrauslegers (5);
Bestimmen der tatsächlichen Position der Bohreinheit (6), die Orts- und Richtungsinformationen umfasst;
Steuern der Positionierung der Bohreinheit (6) mittels mindestens einer Steuereinheit (16);
Angeben eines Ziels für den Ort und die Richtung der Bohreinheit (16) in Bezug auf die tatsächliche Position mittels mindestens eines manuellen Steuerelements (15);
Übertragen des Ziels, das mittels des Steuerelements (15) angegeben wird, an die Steuereinheit (16) und Verarbeiten des Ziels in der Steuereinheit (16) ohne direkte Steuerung von Betätigungsmitteln, welche die Position der Bohreinheit (6) beeinflussen;
Bestimmen der erforderlichen Steuerbewegungen für die Betätigungsmittel (19) in der Steuereinheit (16) unter Berücksichtigung der Zielposition und der tatsächlichen Position;
Steuern der Betätigungsmittel (19) mittels der Steuereinheit (16) und Bewegen der Bohreinheit (6) in Richtung der vorgegebenen Zielposition; **gekennzeichnet durch** das Verbinden jeder einzelnen Bewegungsrichtung des manuellen Steuerelements (15), um die Zielposition der Bohreinheit (6) in Bezug auf nur einen Koordinaten- oder Richtungswinkel zu beeinflussen; und
Verwenden einer intuitiven Verbindung bei der Bewegung der Zielposition und des Steuerelements (15), wobei die tatsächlichen Bewegungsrichtungen der Bohreinheit (6) und des Steuerelements (15) einander derart entsprechen, dass die Bewegungsrichtungen des Steuerelements (15) mit den Richtungen, die in dem Anzeigebild (32) grafisch dargestellt sind, im Bohrmodus einander entsprechen.

2. Verfahren nach Anspruch 1, **gekennzeichnet durch**
Verwenden der Bohreinheit (6) zum Bohren eines fächerartigen Musters, umfassend eine Vielzahl von Bohrlöchern (21);
Bestimmen des Orts der Bohrfächerebene;
Positionieren der Bohreinheit (6) auf der Bohrfächerebene; und Bewegen der Zielposition mittels des Steuerelements (15) in die Richtung der Bohrfächerebene, ohne die Bohrfächerebene zu beeinflussen.

3. Verfahren nach Anspruch 1 oder 2, **gekennzeichnet durch** das Eingeben eines Bohrmusters, das für das Bohren entworfen wurde, in die Anzeigevorrichtung (25) der Steuereinheit (16);
grafisches Darstellen des Bohrmusters in Bezug auf die fragliche Bohrung in dem Anzeigebild (32) der Anzeigevorrichtung (25);
grafisches Darstellen des tatsächlichen Orts der Bohreinheit (6) in Bezug auf das Bohrmuster in dem Anzeigebild (32) mittels eines grafischen Symbols (34);
Bewegen des Steuerelements (15) in eine Richtung, die in dem Anzeigebild (32) grafisch dargestellt ist, um der Steuereinheit eine neue Zielposition zu geben; und
Bewegen der Bohreinheit (6) in die Richtung, die der Bewegung des Steuerelements (15) entspricht, das durch die Steuereinheit (16) gesteuert wird.

4. Verfahren nach einem der vorstehenden Ansprüche,
**gekennzeichnet durch**
Verwenden der Steinbohrvorrichtung zum Fächerbohren;
Bohren eines Fächers aus Löchern zur Befestigung von Verstärkungen; und Durchführen des Bohrens gemäß einem Verstärkungsmuster.

5. Verfahren nach einem der vorstehenden Ansprüche 1 bis 3, **gekennzeichnet durch** Verwenden der Steinbohrvorrichtung zum Fächerbohren;
Bohren eines Fächers aus Löchern zur Ausgrabung; und
Durchführen des Bohrens gemäß einem Ausgrabungsmuster.

6. Verfahren nach einem der vorstehenden Ansprüche,
**gekennzeichnet durch**
Führen der Steinbohrvorrichtung (1) vor Start des Bohrens, wodurch der Ort der Steinbohrvorrichtung (1) bestimmt wird und die erforderlichen Änderungen in Koordinatensystemen durchgeführt werden;
Berücksichtigen des jeweiligen Orts der Bohrfächerebene und der Steinbohrvorrichtung (1) bei der Steuerung der Bohreinheit (6) und Durchführen der erforderlichen Korrekturen für die Steuerung; und
Steuern der Bohreinheit (6) in den Richtungen, die durch das Bohrmuster bestimmt sind, ungeachtet der Beziehung des Ortes der Steinbohrvorrichtung (1) mit dem Bohrmuster.

7. Verfahren nach einem der vorstehenden Ansprüche 1 oder 2, **gekennzeichnet durch**
Verwenden der Steinbohrvorrichtung zum Fächerbohren;
Bestimmen des Orts der Bohrfächerebene auf der Tunnellinie;
Positionieren der Bohreinheit auf der Bohrfächerebene;
Drehen der Bohreinheit auf der Bohrfächerebene, um die zu bohrenden Löcher in den Bohrfächer zu lenken; und
Durchführen der Drehung der Bohreinheit (6) in Bezug auf einen Drehpunkt (PP), dessen Ort vom Bediener auf der Bohrfächerebene bestimmt wird.

8. Verfahren nach Anspruch 7, **gekennzeichnet durch**
Angeben einer neuen Zielposition des Drehpunkts (PP) auf der Fächerebene mittels des Steuerelements (15), wodurch jede einzelne Bewegungsrichtung des Steuerelements (15) auf der Fächerebene die Zielposition der Bohreinheit (6) nur in Bezug auf eine Koordinate beeinflusst.

9. Steuersystem einer Steinbohrvorrichtung, wobei die Steinbohrvorrichtung (1) mindestens einen Bohrausleger (5) und eine darauf angeordnete Bohreinheit (6) zum Bohren eines gewünschten Bohrlochmusters aufweist;
und wobei das Steuersystem umfasst: mindestens eine Steuereinheit (16);
mindestens eine Anzeigevorrichtung (25) mit mindestens einem Anzeigebild (32); mindestens ein Steuerelement (15) zum Vorgeben eines Ziels für den Ort und die Richtung der Bohreinheit durch Bewegen des Steuerelements;
Mittel zum Bestimmen der tatsächlichen Position und Richtung der Bohreinheit (6);
und wobei die Steuereinheit (16) angeordnet ist, um die Bewegungsanforderungen zu bestimmen und die Betätigungsmittel (19) zu steuern, welche die Position der Bohreinheit (6) auf der Grundlage der tatsächlichen Position der Bohreinheit (6) und des angegebenen Ziels durch das Steuerelement (15) beeinflussen; **dadurch gekennzeichnet, dass**
das Steuersystem mindestens einen Bohrmodus umfasst, in dem jede einzelne Bewegungsrichtung des Steuerelements (15) die Bohreinheit in Bezug auf einen Koordinaten- oder Richtungswinkel zwangsläufig zu steuern; und
Bewegungsrichtungen des Steuerelements (15) im Bohrmodus gewählt werden, um den intuitiven Bewegungsrichtungen der Bohreinheit (6) zu entsprechen, sodass die Bewegungsrichtungen des Steuerelements (15) mit den Richtungen verbunden sind, die im Anzeigebild (32) im Bohrmodus grafisch dargestellt sind.

10. Steuersystem nach Anspruch 9, **dadurch gekennzeichnet, dass**
eine Benutzerschnittstelle (31) des Steuersystems zusätzlich zu dem mindestens einen Steuerelement (15) mindestens eine Anzeigevorrichtung (25) umfasst; und
die Anzeigevorrichtung (25) mindestens ein Anzeigebild (32) zum grafischen Darstellen des Ortes der Bohreinheit (6) mittels eines grafischen Symbols (34) und weiter zum grafischen Darstellen des Ortes und der Richtung der Bohrlöcher umfasst, wodurch die Anzeigevorrichtung (25) ein Sichtwerkzeug zum Durchführen einer manuellen Positionierung ist.

11. Steuersystem nach Anspruch 9 oder 10, **dadurch gekennzeichnet, dass**
das Steuersystem einen Fächerbohrmodus umfasst, der dazu bestimmt ist, die Bohreinheit (6) zu steuern, wenn Bohrlöcher fächerartig in Querrichtung in Bezug auf die Tunnellinie gebohrt werden;
das Steuersystem einen Flächenbohrmodus umfasst, der zur Steuerung der Bohreinheit (6) bestimmt ist, wenn Ausgrabungslöcher in Richtung der Tunnellinie gebohrt werden; und
das Steuersystem derart angeordnet ist, dass es auf die Bewegung des Steuerelements (15) mit unterschiedlichen Reaktionen im Fächerbohrmodus und im Flächenbohrmodus reagiert.

12. Steinbohrvorrichtung, umfassend: einen beweglichen Träger (4);
mindestens einen Bohrausleger (5);
eine Bohreinheit (6), die an dem Bohrausleger (5) angeordnet ist und wobei die Bohreinheit (6) einen Vorschubbalken (9) und eine Steinbohrmaschine (7) aufweist;
eine Vielzahl von Gelenken (17) zwischen der Bohreinheit (6) und dem Träger (4) sowie mehrere Betätigungsmittel (19) zum Beeinflussen der Position der Bohreinheit (6);
und ein Steuersystem zum Positionieren der Bohreinheit (6); **dadurch gekennzeichnet, dass** das Steuersystem eines nach Anspruch 9 ist.

13. Steinbohrvorrichtung nach Anspruch 12, **dadurch gekennzeichnet, dass**
eine Benutzerschnittstelle (31) der Steuereinheit (16) mindestens eine Anzeigevorrichtung (25) mit mindestens einem Anzeigebild (32) umfasst;
die Steuereinheit (16) angeordnet ist, um in dem Anzeigebild (32) den Ort der Bohreinheit (6) mittels eines grafischen Symbols (34) anzuzeigen, und
weiter die Orte und Richtungen der Bohrlöcher; und
die Bewegungsrichtungen des Steuerelements (15) mit den Richtungen verbunden sind, die im Anzeigebild (32) grafisch dargestellt sind, wodurch das Bewegen des Steuerelements (15) in eine Richtung, die im Anzeigebild (32) grafisch dargestellt ist, angeordnet ist, um in einer physikalischen Positionierungsbewegung der Bohreinheit (6) in die entsprechende Richtung zu resultieren.

14. Steinbohrvorrichtung nach Anspruch 13, **dadurch gekennzeichnet, dass**
die Steuereinheit (16) angeordnet ist, um in dem Anzeigebild (32) ein Bohrmuster darzustellen und die Orte und Richtungen der Bohrlöcher darin zu bestimmen.

15. Steinbohrvorrichtung nach einem der vorstehenden Ansprüche 12 bis 14, **dadurch gekennzeichnet, dass**
der Bohrausleger (5) und die damit verbundene Bohreinheit (6) mit Mitteln zum Bohren nur eines fächerartigen Bohrmusters bereitgestellt sind;
die Bohreinheit (6) über ein horizontal gerichtetes Drehgelenk (38) mit dem Bohrausleger (5) verbunden ist und in der zu bohrenden Ebene des Fächers drehbar ist, um die Bohreinheit (6) in der im Bohrmuster festgelegten Weise zu lenken; und dadurch, dass
die Steuereinheit (16) so angeordnet ist, um das Drehen der Bohreinheit (6) auf der Fächerebene in Bezug auf einen Drehpunkt (PP) zu steuern, dessen Ort auf der Fächerebene durch Bewegen des Steuerelements (15) frei bestimmt werden kann.

## Revendications

1. Procédé pour forage de roche, le procédé comprenant :
le forage d'une pluralité de trous de forage (21) selon un motif souhaité dans la roche à l'aide d'au moins une unité de forage (6) ;
la présentation graphique d'informations de trou de forage sur le motif de forage dans une image d'affichage (32) d'un dispositif d'affichage (25) ;
le positionnement de l'unité de forage (6) au niveau du point d'un trou de forage à forer au moyen d'une flèche de forage (5) ;
la détermination de la position réelle de l'unité de forage (6), qui comprend des informations d'emplacement et de direction ;
la commande du positionnement de l'unité de forage (6) au moyen d'au moins une unité de commande (16) ;
le fait de donner, au moyen d'au moins un élément de commande manuel (15), une cible pour l'emplacement et la direction de l'unité de forage (16) par rapport à la position réelle ;
la transmission de la cible donnée au moyen de l'élément de commande (15) à l'unité de commande (16) et le traitement de la cible dans l'unité de commande (16) sans commande directe d'actionneurs influençant la position de l'unité de forage (6) ;
la détermination dans l'unité de commande (16) des déplacements de commande nécessaires pour des actionneurs (19), prenant en compte la position cible et la position réelle ;
la commande des actionneurs (19) au moyen de l'unité de commande (16) et le déplacement de l'unité de forage (6) vers la position cible donnée ;
**caractérisé par**
la connexion de chaque direction individuelle de mouvement de l'élément de commande manuel (15) pour influencer la position cible de l'unité de forage (6) par rapport à seulement une coordonnée ou un angle de direction ; et
l'utilisation d'une connexion intuitive lors du déplacement de la position cible et de l'élément de commande (15), moyennant quoi les directions réelles de mouvement de l'unité de forage (6) et de l'élément de commande (15) correspondent entre elles de telle sorte que les directions de mouvement de l'élément de commande (15) sont connectées aux directions présentées dans l'image d'affichage (32) dans le mode forage.

2. Procédé selon la revendication 1, **caractérisé par**
l'utilisation de l'unité de forage (6) pour forer un motif de type éventail comprenant une pluralité de trous de forage (21) ;
la détermination de l'emplacement du plan de forage en éventail ;
le positionnement de l'unité de forage (6) sur le plan de forage en éventail ; et
le déplacement de la position cible au moyen de l'élément de commande (15) dans la direction du plan de forage en éventail sans affecter le plan de forage en éventail.

3. Procédé selon la revendication 1 ou 2, **caractérisé par**
l'entrée d'un motif de forage conçu pour le forage sur le dispositif d'affichage (25) de l'unité de commande (16) ;
la présentation graphique du motif de forage concernant le forage en question dans l'image d'affichage (32) du dispositif d'affichage (25) ;
la présentation dans l'image d'affichage (32) au moyen d'un symbole graphique (34) de l'emplacement réel de l'unité de forage (6) par rapport au motif de forage ;
le déplacement de l'élément de commande (15) dans une direction présentée dans l'image d'affichage (32) pour donner une nouvelle position cible à l'unité de commande ; et
le déplacement de l'unité de forage (6) dans la direction correspondant au déplacement de l'élément de commande (15), commandé par l'unité de commande (16).

4. Procédé selon l'une quelconque des revendications précédentes, **caractérisé par**
l'utilisation de l'installation de forage de roche pour forage en éventail ;
le forage d'un éventail de trous pour le montage de renforcements ; et
la réalisation du forage conformément à un motif de renforcement.

5. Procédé selon l'une quelconque des revendications précédentes 1 à 3, **caractérisé par**
l'utilisation de l'installation de forage de roche pour forage en éventail ;
le forage d'un éventail de trous pour excavation ; et
la réalisation du forage conformément à un motif d'excavation.

6. Procédé selon l'une quelconque des revendications précédentes, **caractérisé par**
la navigation de l'installation de forage de roche (1) avant de démarrer le forage, moyennant quoi l'emplacement de l'installation de forage de roche (1) est déterminé et les changements nécessaires dans des systèmes de coordonnées sont effectués ;
la prise en compte de l'emplacement relatif du plan de forage en éventail et de l'installation de forage de roche (1) lors de la commande de l'unité de forage (6), et la réalisation des corrections nécessaires pour la commande ; et
la commande de l'unité de forage (6) dans les directions déterminées par le motif de forage, quelle que soit la relation de l'emplacement de l'installation de forage de roche (1) par rapport au motif de forage.

7. Procédé selon l'une quelconque des revendications précédentes 1 ou 2, **caractérisé par**
l'utilisation de l'installation de forage de roche pour forage en éventail ;
la détermination de l'emplacement du plan de forage en éventail sur la ligne de tunnel ;
le positionnement de l'unité de forage sur le plan de forage en éventail ;
la rotation de l'unité de forage sur le plan de forage en éventail pour diriger les trous à forer dans l'éventail de forage ; et
la réalisation de la rotation de l'unité de forage (6) par rapport à un point de pivotement (PP), dont l'emplacement est déterminé par l'opérateur sur le plan de forage en éventail.

8. Procédé selon la revendication 7, **caractérisé par**
le fait de donner au point de pivotement (PP) une nouvelle position cible sur le plan en éventail au moyen de l'élément de commande (15), moyennant quoi chaque direction individuelle de mouvement de l'élément de commande (15) sur le plan en éventail influence la position cible de l'unité de forage (6) seulement par rapport à une coordonnée.

9. Système de forage d'une installation de forage de roche, laquelle installation de forage de roche (1) comprend au moins une flèche de forage (5) et une unité de forage (6) agencée sur elle pour forer au moins un motif de trou de forage souhaité ;
et lequel système de commande comprend :
au moins une unité de commande (16) ;
au moins un dispositif d'affichage (25) avec au moins une image d'affichage (32) ;
au moins un élément de commande (15) pour donner une cible pour l'emplacement et la direction de l'unité de forage en déplaçant l'élément de commande ;
un moyen pour déterminer la position réelle et la direction de l'unité de forage (6) ;
et dans lequel l'unité de commande (16) est agencée pour déterminer les exigences de déplacement et pour commander des actionneurs (19) influençant l'emplacement de l'unité de forage (6) sur la base de la position réelle de l'unité de forage (6) et de la cible donnée par l'élément de commande (15) ;
**caractérisé en ce que**
le système de commande comprend au moins un mode de forage dans lequel chaque direction individuelle de mouvement de l'élément de commande (15) est limitée pour commander l'unité de forage par rapport à une coordonnée ou un angle de direction ; et
les directions de mouvement de l'élément de commande (15) sont sélectionnées dans le mode forage pour correspondre aux directions intuitives de mouvement de l'unité de forage (6) de telle sorte que les directions de mouvement de l'élément de commande (15) sont connectées aux directions présentées dans l'image d'affichage (32) dans le mode forage.

10. Système de commande selon la revendication 9, **caractérisé en ce que**
une interface utilisateur (31) du système de commande comprend, en plus dudit au moins un élément de commande (15), au moins un dispositif d'affichage (25) ; et
le dispositif d'affichage (25) comprend au moins une image d'affichage (32) pour présenter l'emplacement de l'unité de forage (6) au moyen d'une symbole graphique (34) et, en outre, pour présenter l'emplacement et la direction des trous de forage, moyennant quoi le dispositif d'affichage (25) est un outil de visée pour effectuer un positionnement manuel.

11. Système de commande selon la revendication 9 ou 10, **caractérisé en ce que**
le système de commande comprend un mode forage en éventail destiné à commander l'unité de forage (6) quand des trous de forage sont forés à la manière d'un éventail dans la direction de croisement par rapport à la ligne de tunnel ;
le système de commande comprend un mode forage de face destiné à commander l'unité de forage (6) quand des trous d'excavation sont forés dans la direction de la ligne de tunnel ; et
le système de commande est agencé pour répondre au déplacement de l'élément de commande (15) avec différentes réponses dans le mode forage en éventail et dans le mode forage de face.

12. Installation de forage de roche comprenant :
un support mobile (4) ;
au moins une flèche de forage (5) ;
une unité de forage (6) qui est agencée sur la flèche de forage (5), et laquelle unité de forage (6) comprend une poutre d'alimentation (9) et une machine de forage de roche (7) ;
une pluralité de raccords (17) entre l'unité de forage (6) et le support (4) ainsi qu'une pluralité d'actionneurs (19) pour influencer la position de l'unité de forage (6) ;
et un système de commande pour positionner l'unité de forage (6) ;
**caractérisé en ce que** le système de commande est selon la revendication 9.

13. Installation de forage de roche selon la revendication 12, **caractérisée en ce que**
une interface utilisateur (31) de l'unité de commande (16) comprend au moins un dispositif d'affichage (25) avec au moins une image d'affichage (32) ;
l'unité de commande (16) est agencée pour afficher dans l'image d'affichage (32) l'emplacement de l'unité de forage (6) au moyen d'un symbole graphique (34) et, en outre, les emplacements et directions des trous de forage ; et
les directions de mouvement de l'élément de commande (15) sont connectées aux directions présentées dans l'image d'affichage (32) dans le mode forage, moyennant quoi le déplacement de l'élément de commande (15) dans une direction présentée dans l'image d'affichage (32) est agencé pour résulter dans un déplacement de positionnement physique de l'unité de forage (6) dans la direction correspondante.

14. Installation de forage de roche selon la revendication 13, **caractérisée en ce que**
l'unité de commande (16) est agencée pour présenter dans l'image d'affichage (32) un motif de forage et les emplacements et directions des trous de forage déterminés dans celui-ci.

15. Installation de forage de roche selon l'une quelconque des revendications précédentes 12 à 14, **caractérisée en ce que**
la flèche de forage (5) et l'unité de forage (6) connectée à elle sont pourvues d'un moyen pour forer seulement un motif de trou de forage de type éventail ;
l'unité de forage (6) est connectée à la flèche de forage (5) au moyen d'un raccord de pivotement dirigé horizontalement (38) et peut être tournée sur le plan de l'éventail à forer pour diriger l'unité de forage (6) de la manière déterminée dans le motif de forage ; et
l'unité de commande (16) est agencée pour commander la rotation de l'unité de forage (6) sur le plan en éventail par rapport à un point de pivotement (PP), dont l'emplacement peut être librement déterminé sur le plan en éventail en déplaçant l'élément de commande (15).
